Europäisches Patentamt

European Patent Office

Office européen des brevets

(11) Publication number: **0 089 376**
**B1**

## EUROPEAN PATENT SPECIFICATION

(45) Date of publication of patent specification: **05.03.86**

(21) Application number: **82902748.1**

(22) Date of filing: **17.09.82**

(86) International application number:
**PCT/JP82/00375**

(87) International publication number:
**WO 83/00988 31.03.83 Gazette 83/08**

(51) Int. Cl.⁴: **A 23 K 1/16,** A 23 K 1/18,
A 23 K 1/02

(54) **FEED ADDITIVE OR FEED.**

(30) Priority: **18.09.81 JP 146358/81**

(43) Date of publication of application:
**28.09.83 Bulletin 83/39**

(45) Publication of the grant of the patent:
**05.03.86 Bulletin 86/10**

(84) Designated Contracting States:
**FR**

(56) References cited:
**FR-A-2 408 310**
**GB-A- 813 361**
**GB-A- 995 912**
**JP-B-44 005 421**
**JP-B-45 005 029**
**JP-B-45 006 856**
**US-A-2 717 209**

**CHEMICAL ABSTRACTS, vol. 98, no. 13, March
28, 1983, page 49, abstract no. 106007w,
COLUMBUS OHIO,US
PATENTS ABSTRACTS OF JAPAN, vol. 6, no.
106, June 16, 1982, page (C-108)(984)**

(73) Proprietor: **MITSUI TOATSU CHEMICALS,
INCORPORATED**
**2-5 Kasumigaseki 3-chome
Chiyoda-Ku Tokyo 100 (JP)**

(72) Inventor: **MASUDA, Takayoshi**
**4-303, Mukaihazama 1-2 Nawacho
Tokai-shi Aichi-ken 476 (JP)**
Inventor: **WATANABE, Yoshimoto**
**3078-78, Matsushincho 3-chome Kasugai-shi
Aichi-ken 486 (JP)**
Inventor: **HONJOU, Masaru**
**2882, Iijimacho Totsuka-ku Yokohama-shi
Kanagawaken 244 (JP)**

(74) Representative: **Kohn, Armand**
**5 Avenue Foch
F-92380 Garches (FR)**

Courier Press, Leamington Spa, England.

**Description**

Field of the art

The present invention relates to a feed additive containing at least a saccharide fatty acid ester jointly with at least a fatty acid salt; it also comprises a feed which contains such an additive, useful for animals, for instance livestock, poultries, fishes etc.

Background of the art

Using feeds for animals have been promptly changed in recent years from using mainly self-supplying feeds to using formula feeds produced in modern factories in consideration of the amounts of nutrients required by intended animals, animal growth promotions, animal health maintenances etc. to result in a very high ratio of the use amounts of formula feeds to the total use amounts of all feeds nowadays.

For such formula feeds, it is generally employed to use, as supplemental ingredients, various additives, such as amino acids, minerals, vitamins, enzymes, antibiotics etc. with various objects, such as nutrient replenishment, nutrient fortification, improvements of digestion and absorption, growth promotion, disease prevention etc., besides main ingredients, such as cereal grains, oil seed meals, chaffs and brans, fish meals, oils and fats etc.

Thus, various feed additives were described in the following prior publications: GB—A—813,361, US—A—2,717,209, FR—A—2,408,310 and GB—A—995,912.

One of the most desired objects in the productions of livestocks and poultries and in the fishes cultivations etc. is to produce livestock, poultry and fish products efficiently in a shorter period and also in less amounts of feeds.

Antibiotics have hitherto been mainly used to achieve such an object. However, the uses of antibiotics are now in question because it is apprehended that careless uses of antibiotics for feeds may accelerate the appearances of bacteria with drug resistance and that the remainings and transferrings of antibiotics into the human body may cause allergies or the changes of enteric bacterial flora. Therefore, antibiotics have now a tendency to be used under the limitations or the reductions of the kinds, the use amounts or the use terms etc. of antibiotics.

Accordingly it is now expected that novel very safe feed additives or feeds will be provided which will be able to improve the productivities of livestock, poultry and fish products under no necessity of the frequent uses or the much use of drugs, such as antibiotics etc.

Disclosure of the invention

The present inventors' continuous research has attained the facts that a feed additive comprising at least saccharide fatty acid ester and fatty acid salt or a feed comprising said feed additive (referred to as a feed simply hereinafter) can show excellent effects on the improvements of feed efficiencies, growth promotions, health maintenances etc. for various animals, such as livestocks, poultries, fishes etc. The facts described above have produced the present invention.

Describing in passing, it is known that a feed comprising saccharide fatty acid ester, especially sucrose fatty acid ester, promotes the growths of specified animals, such as young cattle, young pigs etc. That effect is however insufficient. The present inventors have first found that the very combination use of saccharide fatty acid ester and fatty acid salt can give a very remarkable effect to many kinds of animals.

The present invention is explained in detail hereinafter.

The typical examples of the animals covered by the feed additive or the feed of the present invention are enumerated as follows: livestocks, such as beef cattle, dairy cattle, young cattle, pigs, young pigs, sheep, goats, horses, rabbits, dogs, cats etc.; poultries, such as chicken domestic fowls, laying hens, seed cocks, domestic ducks, geese, turkeys, quails, small birds etc.; fishes, such as eel, carps, ayu, trouts, rainbow trout, yellowtail, sea bream, silver salmon, gold fishes, colored carp, tropical fishes etc.; shellfishes; crustaceans; animals for fur, such as mink etc.; laboratory animals, such as mice, rats, hamsters etc.

The typical examples of fatty acid salts in the present invention are enumerated as follows: alkali metal salts, such as lithium salts, sodium salts, potassium salts etc.; alkaline earth metal salts, such as magnesium salts, calcium salts, barium salts etc.; various metal salts, such as zinc salts, aluminum salts, iron salts, manganese salts etc.; ammonium salts; organoamine salts, such as monoethanolamine salts, diethanolamine salts, triethanolamine salts etc.; basic amino acid salts, such as lysine salts, ornithine salts, arginine salts, histidine salts, hydroxylysine salts, etc., and most of all, alkali metal salts, ammonium salts and basic amino acid salts are usually used in general.

Fatty acids with 6—24 carbons are suitable as the component part of fatty acid salt. Both of saturated and unsaturated fatty acids are usable. Both of fatty acids with a strait carbon chain and fatty acids with a branched carbon chain are usable. Fatty acids with one or more of substituents, such as hydroxyl group, are usable. Fatty acids are not necessarily monobasic acids, and dibasic acids etc. are also usable. Fatty acids are not restricted to fatty acids derived from natural materials, such as oils or fats etc. Synthetic fatty acids are also usable which are produced by the liquid-phase catalytic oxidations of paraffins, the carbonylations of α-olefins (oxo method), the carboxylations of branched olefins (Koch's method) or other methods. The typical examples of such fatty acids are enumerated as follows: caproic acid, enanthic acid, caprylic acid, pelargonic acid, capric acid, lauric acid, tridecanoic acid, 2-methyltetradecanoic acid, 5-methyltetradecanoic acid, 2,2-dimethyltetradecanoic acid, myristic acid, palmitic acid, margaric acid, stearic acid, arachic acid, behenic acid, lignoceric acid, oleic acid, elaidic acid, linoleic acid, linolenic acid, ricinoleic acid, arachidonic acid, eicosapentaenoic acid, erucic acid, azelaic acid, sebacic acid, 1,20-eicosamethylenedicarboxylic acid etc. One or several such fatty acid salts may be used in particular mixtures of two or more kinds of fatty acid salts of which fatty acids parts are different or of which cation parts are different.

The typical examples of saccharide fatty acid esters in the present invention are esters of fatty acid with 6—24 carbons and monosaccharide or oligosaccharide. The typical examples of such saccharides are enumerated as follows: arabinose, xylose, ribose, lyxose, ribulose, xylulose, glucose, galactose, talose, mannose, fructose, sorbose, tagatose, psicose, maltose, isomaltose, cellobiose, gentiobiose, trehalose, lactose, sucrose, maltotriose, gentianose, raffinose, stachyose etc. Monoesters, polyesters, such as diesters, triesters, tetraesters etc. and the mixtures of two or more of them are usable: monoester has one ester linkage in one molecule of saccharide fatty acid ester; polyester has two or more ester linkages in one molecule of saccharide fatty acid ester. Among such esters, monoesters, diesters and triesters are usually preferable. Among the saccharide fatty acid esters described above, sucrose fatty acid esters are examples of the saccharide fatty acid esters which are most suitable in the present invention, since they are easily available and also considerably low-priced owing to the industrial mass-productions. The fatty acids described above concerning fatty acid salts are usable as the fatty acid part of saccharide fatty acid ester. One or several different saccharide fatty acid esters are usable, in particular such ones in which the saccharide parts or the fatty acid parts are different.

Such fatty acid salts and saccharide fatty acid esters can be easily produced by known methods, and ones produced by any method are usable in the present invention.

Fatty acid salts can be easily produced by known methods, for example, by reacting fatty acid or fatty acid ester, for example, fatty acid methyl ester, fatty acid ethyl ester, fatty acid glyceride etc. with oxide, hydroxide, carbonate or hydrogencarbonate of alkali metal or alkaline earth metal etc., basic amino acid, ammonia or organoamine etc., or by other methods.

The fatty acid salts produced in advance by the above-described methods etc. are not necessarily used. For example, it is employable to treat as follows: fatty acid and oxide, hydroxide, carbonate or hydrogencarbonate of alkali metal, ammonia or basic amino acid etc. are used in the free state each so that fatty acid salt may be prepared in a feed additive or a feed to result in providing the feed additive or the feed of the present invention.

The typical examples of processes for preparing saccharide fatty acid esters are enumerated as follows: (1) saccharide and fatty acid lower-alkyl ester, for example, fatty acid methyl ester, fatty acid ethyl ester etc. are subjected to the alcoholysis using fatty acid salt, for example, fatty acid sodium salt, fatty acid potassium salt etc. and a basic catalyst in the presence of water or solvent, for example, propyleneglycol etc.; (2) saccharide and fatty acid methyl ester, fatty acid carbitol ester or fatty acid glyceride (mono-, di- and triglyceride) etc. are subjected to the alcoholysis in the presence of fatty acid salt, for example, fatty acid sodium salt, fatty acid potassium salt etc.; (3) saccharide and oil or fat, that is, fatty acid triglyceride are subjected to the alcoholysis in the presence of a basic catalyst; (4) saccharide is reacted with fatty acid chloride or fatty acid anhydride. Among these processes, (1), (2) and (3) are very advantageous, because the crude products prepared by these processes contain saccharide fatty acid ester and fatty acid salt (usually, fatty acid alkali metal salt) and in addition the crude products being able to be economically prepared are usable for the feed additive or the feed of the present invention without purification, namely, as they are.

The suitable use amount ratio by weight of saccharide fatty acid ester to fatty acid salt in the feed additive or the feed of the present invention is usually in the range of 97:3 to 3:97, preferably 95:5 to 5:95, most preferably 90:10 to 10:90.

The present invention does not necessarily require the fatty acid salts and the saccharide fatty acid esters purified to a high degree. The present invention can use the fatty acid salts and the saccharides fatty acid esters accompanied by one or more of the substances highly safe for the living body, such as saccharides, fatty acid loweralkyl esters, fatty acid glycerides (mono-, di- and triglyceride), fatty acids, alkali metal carbonates, basic amino acids etc. which remain owing to partial unreaction or may remain in the production of fatty acid salt or saccharide fatty acid ester as in the case of the crude saccharide fatty acid ester described above, and byproducts, such as alcohol, glycerin etc.

In the use of saccharide fatty acid ester and fatty acid salt for the feed additive or the feed of the present invention, the total use amount of saccharide fatty acid ester and fatty acid salt is usually 0.001—20% by weight, preferably 0.01—10% by weight, most preferably about 0.02—5% by weight to the amount of the feed (containing ingredients other than saccharide fatty acid ester and fatty acid salt) being finally given to animals, such as livestocks, poultries, fishes etc., though the total use amount of the both varies with the factors, such as the kinds of the intended animals, the ages of the intended animals, the kinds of ingredients other than the both and the mixing ratio of them etc.

In the case that use amounts described above are less than the lowest limit values, it becomes difficult to show the effect of the present invention, and the uses of the amounts exceeding the highest limit values

# 0 089 376

described above do not show any specific effect and are rather uneconomical, so that such uses are not desirable.

In the combination use of saccharide fatty acid ester and fatty acid salt, the feed additive of the present invention is usable as the mixture is, or in the form of an aqueous solution or an aqueous suspension prepared by diluting it or these mixture with water. Further, various materials are usable as a diluting agent for it or these mixture described above in the feed additive of the present invention in the same manner as in the uses of known additives, such as vitamins, minerals, enzymes etc., which various materials are enumerated as follows: wheat flour, starch, dextrin; feed materials being widely used, for example, cereal grains, such as corn, milo (kaoliang) etc.; chaffs and brans, such as rice bran, deoiled rice-bran, wheat bran etc.; oil seed meals, such as soybean meal, rapeseed meal, cottonseed meal, linseed meal etc.; or oils and fats, such as beef tallow, soybean oil, palm oil, coconut oil, fish oil etc. Usually the feed additive of the present invention is finally added into feed and mixed to give to animals. The feed additive of the present invention is able to be given to animals in the form of the drinking water prepared by diluting it with water.

On the other hand, the feed of the present invention is prepared by mixing the feed additive described above with one or more of materials being widely used for feeds in this industrial field, for example, cereal grains, such as corn, wheat, barley, rye, rice, oat, milo (kaoliang) etc., chaffs and brans, such as rice bran, deoiled ricebran, wheat bran etc., oil seed meals, such as soybean meal, rapeseed meal, cottonseed meal etc., fish meals, fish solubles, skim milk, whey, molasses, oils and fats, such as yellow grease, tallow, soybean oil, palm oil, fish oils etc.; roughages, such as rice straw, dried grasses, silages etc. The feed is further optionally added with additives which are, for example, as follows: amino acids, such as methionin, lysine, tryptophane, threonine, glycine etc.; vitamins, such as vitamin A, vitamin B, vitamin C, vitamin D, vitamin E, vitamin K etc.; choline; nicotinic acid; nicotinic acid amide; sodium chloride; minerals, such as calcium, phosphorus etc.; enzymes, such as protease, amylase, cellulase, lipase etc.; emulsifiers, such as soybean lecithin, propylene glycol fatty acid ester esters, glycerin fatty acid esters, polyoxyethylene glycerin fatty acid esters, sorbitan fatty acid esters, polyoxyethylene sorbitan fatty acid esters etc.; hormones; chemical preservatives; aromas; polyhydric alcohols, such as propylene glycol, glycerin etc.; sugaralcohols, such as sorbitol, mannitol etc.; saccharides, such as glucose, fructose, sucrose, lactose etc.; caking agent; synthetic antibacterial agents, antibiotics etc.

Feed materials and feed additives other than fatty acid salt and saccharide fatty acid ester in the feed additive or the feed of the present invention do not have any specific limitation in point of kind, mixing ratio etc. and are properly selected and used. However, there is generally a tendency that the present invention shows an outstanding effect in case that protein, or oil or fat has its high content in a feed given finally to animals. In recent years people have been taking a growing interest in using oil or fat (oil or fat source) as an energy source in a feed more than the conventional use amount of oil or fat in order to reduce the use amounts of protein sources being feed materials, such as fish meal etc. The present invention shows an excellent effect also in the use of such a feed having a high content of protein and a low content of oil or fat.

Further, as described later, the digestions and absorptions of all nutrients in the feed are promoted to result in the improvement of the feed efficiency owing to the synergism of saccharide fatty acid ester and fatty acid salt. Therefore, the present invention can obtain the animal growth results equal to or superior to those of conventional feeds even in the case of feeds on a nutritive level lower than conventional feeds.

The feed additive or the feed of the present invention is usable in optional forms, such as powder, granule, pellet, crumble, cube, half-wetted, paste etc.

Both of fatty acid salt and saccharide fatty acid ester are very useful as an energy source in the feed additive or the feed of the present invention. Further, the digestions and absorptions of all nutrients, such as oil or fat, protein etc. in the feed are improved to result in the growth promotions of animals, such as livestocks, poultries, fishes etc., in the improvement of feed efficiencies and in other effects owing to the synergism of saccharide fatty acid ester and fatty acid salt. A remarkable improvement effect of feed efficiency is obtained: though the increase in animal body weight is almost equal to that in the case of conventional feeds, the feed intake is considerably lowered to result in a remarkable improvement of feed efficiency; it is mainly shown under certain conditions, such as the kinds of intended animals, the nutritive levels of given feeds etc. Describing in passing, though it is known that a feed comprising saccharide fatty acid ester, especially sucrose fatty acid ester, promotes the growths of young cattle, young pigs etc., the single use of saccharide fatty acid ester can not show a sufficient effect. A very excellent efficiency can be shown by the combination use of saccharide fatty acid ester and fatty acid salt.

Further, the feed additive or the feed of the present invention gives desirable influences also on health maintenances, physical strength developments etc. for animals, such as livestocks, poultries, fishes etc.

Further, the combination use of saccharide fatty acid ester and fatty acid salt can show an emulsifying power, especially an oil-in-water (O/W) type emulsifying power, far superior to that in case of using saccharide fatty acid ester alone. Therefore, when the present invention is applied to the substitute milk (usually powder), of which main ingredients are skim milk and oil or fat, for suckling and young mammals, such as young cattle etc., the present invention shows not only the physiological properties described above, but also other effects, such as the shortening of the time for suspending or dissolving the substitute milk into water or heated water, the remarkable improvement of the homogeneity stability of the substitute milk solution etc. in the case of preparing the substitute milk solution by adding water or heated water into the substituted milk.

4

**0 089 376**

Furthermore, it has been known that fatty acid salt and saccharide fatty acid ester are very safe for the living body and therefore the feed additive or the feed of the present invention is quite out of the question in point of safety.

As described above, the feed additive or the feed of the present invention has a high utility value owing to the combination of a very high safety and an excellent efficiency.

Analytical method

Samples are collected two hours and five hours after the start of the incubation, the fatty acid produced by the hydrolysis of oil or fat with enzyme is determined by gas chromatography, and thereafter the hydrolysis rate of the oil or fat used is calculated according to the following calculating formula.

Hydrolysis rate (%) of oil or fat=

$$\frac{\text{Molar number of the fatty acid produced after the incubation}}{\text{Molar number of the oil or fat (triglyceride) before the incubation} \times 3} \times 100$$

Controls 1 and 2

The hydrolysis rate of coconut oil or oleic acid triglyceride was determined in the same manner as described in Examples 1—5 except not to use fatty acid salt at all. The results were shown in Table 1.

Examples 1—8

In order to examine the effect of the combination addition of saccharide fatty acid ester and fatty acid salt in the present invention on the hydrolysis of oil or fat with enzyme, an animal enteric environment was artificially prepared in vitro and the hydrolysis rate of coconut oil or oleic acid triglyceride in said enteric environment was determined. The results are shown in Table 1.

The test conditions and the analytical method are as follows:

Test conditions:

| Compositions of assay mixtures | Parts by weight |
|---|---|
| Oil or fat (coconut oil or oleic acid triglyceride) | 5 |
| 0.01 M/l phosphate buffer (pH 8) | 10 |
| Deionized water | 85 |
| Commercially available lipase derived from pancreatic juice | 0.2 |
| Saccharide fatty acid ester } total<br>Fatty acid salt | 0.2 |

The hydrolysis of oil or fat with enzyme is carried out by incubating each assay mixture described above with stirring at 37°C in an incubator.

Analytical method:

Samples are collected two hours and five hours after the start of the incubation, the fatty acid produced by the hydrolysis of oil or fat with enzyme is determined by gas chromatography, and thereafter the hydrolysis rate of oil or fat is calculated according to the calculating formula shown above.

Example 9

The hydrolysis rate of coconut oil was determined in the same manner as described in Examples 1—5 except to use 0.2 parts by weight of the crude products (the crude products contain the following substances: sucrose beef tallow fatty acid ester: 30% by weight (monoester/diester=65/35 weight ratio), beef tallow fatty acid potassium salt: 28% by weight, sucrose: 20% by weight, beef tallow fatty acid triglyceride: 18% by weight (total amount of mono-, di- and triglyceride) and glycerin etc.: 4% by weight) prepared by the alcoholysis of sucrose and beef tallow, using potassium carbonate as a catalyst.

Controls 1 and 2

The hydrolysis rate of coconut oil or oleic acid triglyceride was determined in the same manner as described in Examples 1—8 except not to use saccharide fatty acid ester and fatty acid salt at all. The results were shown in Table 1.

5

Controls 4 and 5

The hydrolysis rate of coconut oil or oleic acid triglyceride was determined in the same manner as described in Examples 1—8 except touse 0.2 parts by weight of saccharide fatty acid ester and not to use fatty acid salt at all. The results were shown in Table 1.

Examples 10—13

In order to examine the effect of the combination addition of saccharide fatty acid ester and fatty acid salt on the hydrolysis of protein with enzyme in the presence of oil or fat, an animal enteric environment was artificially prepared in vitro and the hydrolysis rate of milk casein in the presence of coconut oil in said enteric environment was determined. The results were shown in Table 2. The test conditions and the analytical method are as follows:

Test conditions:

| Composition of assay mixtures | Parts by weight |
|---|---|
| Milk casein | 0.5 |
| Coconut oil | 5 |
| 0.01 M/l phosphate buffer (pH 8) | 10 |
| Deionized water | 85 |
| Commercially available lipase derived from pancreatic juice | 0.2 |
| Commercially available pancreatin | 0.2 |
| Saccharide fatty acid ester ⎫ total<br>Fatty acid salt ⎭ | 0.2 |

The hydrolysis of milk casein with enzyme is carried out by incubating each assay mixture having the above composition with stirring for five hours at 37°C in an incubator.

Analytical method:

The concentration of milk casein is determined by a conventional method before and after the incubation and the hydrolysis rate of milk casein is calculated.

Example 14

The hydrolysis rate of milk casein was determined in the same manner as described in Examples 10—13 except to use 0.2 parts by weight of the same crude products (containing sucrose beef tallow fatty acid ester: 30% by weight, beef tallow fatty acid potassium salt: 28% by weight and others: 42% by weight) as used in Example 9. The results were shown in Table 2.

Control 6

The hydrolysis rate of milk casein was determined in the same manner as described in Examples 10—13 except not to use saccharide fatty acid ester and fatty acid salt at all. The results were shown in Table 2.

Control 7

The hydrolysis rate of milk casein was determined in the same manner as described in Examples 10—13 except to use only 0.2 parts by weight of saccharide fatty acid ester and not to use fatty acid salt at all. The results were shown in Table 2.

TABLE 1

| Example or control | Kinds of oils or fats | Kinds of saccharide fatty acid esters (A) | Kinds of fatty acid salts (B) | (A)/(B) (weight ratio) | Hydrolysis rate (%) of oil or fat | |
|---|---|---|---|---|---|---|
| | | | | | 2 hrs after | 5 hrs after |
| Example 1 | Coconut oil | Sucrose beef tallow fatty acid ester mono-: 70% by w. di-: 30% by w. | Beef tallow fatty acid sodium salt | 80/20 | 45 | 69 |
| Example 2 | Ditto | Ditto | Ditto | 50/50 | 43 | 65 |
| Example 3 | Ditto | Ditto | Ditto | 20/80 | 40 | 59 |
| Example 4 | Ditto | Ditto | Beef tallow fatty acid L-lysine salt | 50/50 | 47 | 70 |
| Example 5 | Ditto | Raffinose beef tallow fatty acid ester ( mono-: 60% by w. di-: 30% by w. tri-: 10% by w. ) | Beef tallow fatty acid potassium salt | 40/60 | 41 | 67 |
| Example 6 | Oleic acid triglyceride | Maltotriose palmitic acid ester ( mono-: 70% by w. di-: 30% by w. ) | Palmitic acid sodium salt | 40/60 | 39 | 64 |
| Example 7 | Ditto | Sucrose coconut fatty acid ester ( mono-: 70% by w. di-: 30% by w. ) | Coconut fatty acid potassium salt | 60/40 | 42 | 66 |

TABLE 1 (continued from page 28)

| Example or control | Kinds of oils or fats | Kinds of saccharide fatty acid esters (A) | Kinds of fatty acid salts (B) | (A)/(B) (weight ratio) | Hydrolysis rate (%) of oil or fat | |
|---|---|---|---|---|---|---|
| | | | | | 2 hrs after | 5 hrs after |
| Example 8 | Oleic acid triglyceride | Sucrose coconut fatty fatty acid ester ( mono-: 70% by w. di-: 30% by w. ) | Coconut fatty acid ammonium salt | 50/50 | 40 | 62 |
| Example 9 | Coconut oil | Crude products prepared by subjecting sucrose and beef tallow to the alcoholysis using potassium carbonate as catalyst: the details are described in the body of the specification. | | | 43 | 67 |
| Control 1 | Ditto | — | — | — | 10 | 18 |
| Control 2 | Oleic acid triglyceride | — | — | — | 12 | 21 |
| Control 4 | Coconut oil | Sucrose beef tallow fatty acid ester ( mono-: 70% by w. di-: 30% by w. ) | — | 100/0 | 21 | 42 |
| Control 5 | Oleic acid triglyceride | Maltotriose palmitic acid ester ( mono-: 70% by w. di-: 30% by w. ) | — | 100/0 | 24 | 44 |

TABLE 2

| Example or control | Kinds of saccharide fatty acid esters (A) | Kinds of fatty acid salts (B) | (A)/(B) (weight ratio) | Hydrolysis rate (%) of milk casein |
|---|---|---|---|---|
| Example 10 | Sucrose beef tallow fatty acid ester mono-: 70% by w. di-: 30% by w. | Beef tallow fatty acid potassium salt | 70/30 | 74.2 |
| Example 11 | Ditto | Oleic acid L-arginine salt | 30/70 | 69.5 |
| Example 12 | Sucrose oleic acid ester mono-: 70% by w. di-: 30% by w. | Oleic acid sodium salt | 50/50 | 73.4 |
| Example 13 | Raffinose beef tallow fatty acid ester mono-: 60% by w. di-: 30% by w. tri-: 10% by w. | Lauric acid potassium salt | 40/60 | 71.5 |
| Example 14 | The same crude products as used in Example 9 | | | 73.8 |
| Control 6 | — | — | — | 23.5 |
| Control 7 | Sucrose beef tallow fatty acid ester mono-: 70% by w. di-: 30% by w. | — | 100/0 | 46.0 |

Example 15

One hundred and twenty broilers (female: 60, male: 60) were divided into six groups respectively consisting of 20 broilers (female: 10, male: 10) and the feeding trials were carried out for 10 weeks by giving the respective feeds shown in Table 3 to each group. The results were shown in Table 4.

Example 16

Twenty four young pigs (wealings, female: 12; male: 12) of about 25 days of age were divided into three groups respectively consisting of eight young pigs (female: 4, male: 4) and the feeding trials were carried out for 14 weeks by giving the respective feeds shown in Table 5 to each group. The results were shown in Table 6.

Example 17

Ten Holstein bullocks were divided into two groups (test group and control group) respectively consisting of five bullocks and the feeding trials were carried out for 40 weeks by giving (free feeding) the undermentioned respective concentrate feeds to each group. Besides the concentrate feed, a small quantity of roughage (equivalent mixture of rice straw and dried grass: the total amount of digestible nutrients (TDN): 42.4%; the digestible crude protein (DCP): 1.8%) was given to each group. The results were shown in Table 7.

Contents of concentrate feeds
Control group:

62.4% cereal grains (corn, milo, wheat, barley and the like), 13.5% chaffs and brans (wheat bran, rice bran) and 24.1% others (soybean meal, molasses, alfalfa, yellow grease, mineral etc.); TDN: 76.0%, DCP: 9.3%

Test group:

The mixture of 100 parts by weight of the concentrate feed for the control group and one part by weight of the same crude products prepared by reaction (30% by weight sucrose beef tallow fatty acid ester (monoester/diester=65/35 weight ratio), 28% by weight beef tallow fatty acid potassium salt and 42% by weight others) as used in Example 9.

TABLE 3

| Group | | 1 Test No. 1 | | 2 Test No. 2 | |
| --- | --- | --- | --- | --- | --- |
| Division | | 0—4 weeks | 5—10 weeks | 0—4 weeks | 5—10 weeks |
| Ingredients and mixing ratio in each given feed (parts by weight) | Commercially available feed for broilers for the former period (Note 1) | 100 | — | 100 | — |
| | Commercially available feed for broilers for the latter period (Note 2) | — | 100 | — | 100 |
| | Beef tallow | 3 | 3 | 3 | 3 |
| | The same crude products as used in Example 9 (Note 3) | 1 | 1 | 0.1 | 0.1 |
| | Sucrose stearic acid ester mono-: 50% by w. (di-: 30% by w. tri-: 20% by w.) | — | — | — | — |
| | Stearic acid sodium salt | — | — | — | — |
| | Beef tallow fatty acid L-lysine salt | — | — | — | — |

Note 1. Standard feed for test: crude protein $\geqq$20%, crude fat $\geqq$5%, metabolizable energy $\geqq$2800 Kcal/kg

Note 2. Standard feed for test: crude protein $\geqq$17%, crude fat $\geqq$8%, metabolizable energy $\geqq$3000 Kcal/kg

Note 3. The crude products contain 30% by weight sucrose beef tallow fatty acid ester (mono-/di-=65/35 weight ratio), 28% by weight beef tallow fatty acid potassium salt and 42% by weight others.

TABLE 3 (continued

| Group<br>Division | | 3<br>Test No. 3 | | 4<br>Test No. 4 | |
|---|---|---|---|---|---|
| | | 0—4<br>weeks | 5—10<br>weeks | 0—4<br>weeks | 5—10<br>weeks |
| Ingredients and mixing ratio in each given feed (parts by weight) | Commercially available feed for broilers for the former period (Note 1) | 100 | — | 100 | — |
| | Commercially available feed for broilers for the latter period (Note 2) | — | 100 | — | 100 |
| | Beef tallow | 3 | 3 | 3 | 3 |
| | The same crude products as used in Example 9 (Note 3) | — | — | — | — |
| | Sucrose stearic acid ester mono-: 50% by w. (di-: 30% by w.) (tri-: 20% by w.) | 0.12 | 0.12 | 0.08 | 0.08 |
| | Stearic acid sodium salt | 0.08 | 0.08 | — | — |
| | Beef tallow fatty acid L-lysine salt | — | — | 0.12 | 0.12 |

Note 1. Standard feed for test: crude protein $\geqq$20%, crude fat $\geqq$5%, metabolizable energy $\geqq$2800 Kcal/kg

Note 2. Standard feed for test: crude protein $\geqq$17%, crude fat $\geqq$8%, metabolizable energy $\geqq$3000 Kcal/kg

Note 3. The crude products contain 30% by weight sucrose beef tallow fatty acid ester (mono-/di-=65/35 weight ratio), 28% by weight beef tallow fatty acid potassium salt and 42% by weight others.

TABLE 3 (continued

| Group Division | | 5 Control No. 1 | | 6 Control No. 2 | |
|---|---|---|---|---|---|
| | | 0—4 weeks | 5—10 weeks | 0—4 weeks | 5—10 weeks |
| Ingredients and mixing ratio in each given feed (parts by weight) | Commercially available feed for broilers for the former period (Note 1) | 100 | — | 100 | — |
| | Commercially available feed for broilers for the latter period (Note 2) | — | 100 | — | 100 |
| | Beef tallow | 3 | 3 | 3 | 3 |
| | The same crude products as used in Example 9 (Note 3) | — | — | — | — |
| | Sucrose stearic acid ester mono-: 50% by w. (di-: 30% by w. tri-: 20% by w.) | 0.2 | 0.2 | — | — |
| | Stearic acid sodium salt | — | — | — | — |
| | Beef tallow fatty acid L-lysine salt | — | — | — | — |

Note 1. Standard feed for test: crude protein $\geqq$20%, crude fat $\geqq$5%, metabolizable energy $\geqq$2800 Kcal/kg
Note 2. Standard feed for test: crude protein $\geqq$17%, crude fat $\geqq$8%, metabolizable energy $\geqq$3000 Kcal/kg
Note 3. The crude products contain 30% by weight sucrose beef tallow fatty acid ester (mono-/di-=65/35 weight ratio), 28% by weight beef tallow fatty acid potassium salt and 42% by weight others.

TABLE 4

| Group Division | | 1 Test No. 1 | 2 Test No. 2 | 3 Test No. 3 |
|---|---|---|---|---|
| Average weight (g/broiler) | Start of feeding | 42 | 42 | 43 |
| | 4 weeks after | 644 | 625 | 615 |
| | 10 weeks after | 2705 | 2608 | 2590 |
| Average increase in body weight (g/broiler), (start-10 weeks) | | 2663 | 2566 | 2547 |
| Increase index in body weight | | 126.1 | 121.6 | 120.7 |
| Feed intake (g/broiler), (start-10 weeks) | | 5520 | 5495 | 5441 |
| Feed conversion | | 2.07 | 2.14 | 2.14 |
| Feed efficiency | | 0.482 | 0.467 | 0.468 |
| Health condition | | Good | Good | Good |

TABLE 4 (continued

| Group Division | | 4 Test No. 4 | 5 Control No. 1 | 6 Control No. 2 |
|---|---|---|---|---|
| Average weight (g/broiler) | Start of feeding | 42 | 43 | 45 |
| | 4 weeks after | 636 | 590 | 555 |
| | 10 weeks after | 2636 | 2393 | 2156 |
| Average increase in body weight (g/broiler), (start-10 weeks) | | 2594 | 2350 | 2111 |
| Increase index in body weight | | 122.9 | 111.3 | 100 |
| Feed intake (g/broiler), (start-10 weeks) | | 5469 | 5425 | 5319 |
| Feed conversion | | 2.11 | 2.31 | 2.52 |
| Feed efficiency | | 0.474 | 0.433 | 0.397 |
| Health condition | | Good | Good | Some broilers showed diarrhea sometimes. |

TABLE 5

| Group Division | | 1 Test No. 1 | | | 2 Test No. 2 | | | 3 Control | | |
|---|---|---|---|---|---|---|---|---|---|---|
| | | 0—1 weeks | 2—5 weeks | 6—14 weeks | 0—1 weeks | 2—5 weeks | 6—14 weeks | 0—1 weeks | 2—5 weeks | 6—14 weeks |
| Ingredients and mixing ratio in each given feed (parts by weight) | Corn | 28.1 | 34.3 | 65.9 | 28.1 | 34.3 | 65.9 | 28.1 | 34.3 | 65.9 |
| | Wheat flour | 20 | 25 | — | 20 | 25 | — | 20 | 25 | — |
| | Soybean cake | 7 | 8 | 6.5 | 7 | 8 | 6.5 | 7 | 8 | 6.5 |
| | Fish meal | 7 | 5 | 5 | 7 | 5 | 5 | 7 | 5 | 5 |
| | Skim milk | 27 | 15 | — | 27 | 15 | — | 27 | 15 | — |
| | Deoiled rice-bran | — | — | 7.3 | — | — | 7.3 | — | — | 7.3 |
| | Wheat bran | — | — | 10 | — | — | 10 | — | — | 10 |
| | Glucose | 10 | 10 | — | 10 | 10 | — | 10 | 10 | — |
| | Mineral, vitamin etc. | 0.9 | 2.7 | 5.3 | 0.9 | 2.7 | 5.3 | 0.9 | 2.7 | 5.3 |
| | The same crude products as used in Example 9. (Note)) | 1 | 1 | 1 | 0.5 | 0.5 | 0.5 | — | — | — |

Note: The crude products contain 30% by weight sucrose beef tallow fatty acid ester (mono-/di-=65/35 weight ratio), 28% by weight beef tallow fatty acid potassium salt and 42% by weight others.

## 0 089 376

TABLE 6

| Group / Division | | 1 Test No. 1 | 2 Test No. 2 | 3 Control |
|---|---|---|---|---|
| Average body weight (kg/pig) | Start of feeding (0 week) | 7.4 | 7.4 | 7.4 |
| | 5 weeks after | 23.5 | 23.0 | 22.0 |
| | 14 weeks after | 74.4 | 71.9 | 68.1 |
| Average increase in body weight (kg/pig) | 0—5 weeks after | 16.1 | 15.6 | 14.6 |
| | 0—14 weeks after | 67.0 | 64.5 | 60.7 |
| Increase index in body weight | 0—5 weeks after | 110.3 | 106.8 | 100 |
| | 0—14 weeks after | 110.4 | 106.3 | 100 |
| Feed intake (kg/pig) | 0—5 weeks after | 28.8 | 28.6 | 28.9 |
| | 0—14 weeks after | 171.5 | 167.1 | 168.5 |
| Feed conversion | 0—5 weeks after | 1.79 | 1.83 | 1.98 |
| | 0—14 weeks after | 2.56 | 2.59 | 2.78 |
| Feed efficiency | 0—5 weeks after | 0.559 | 0.545 | 0.505 |
| | 0—14 weeks after | 0.391 | 0.386 | 0.360 |

TABLE 7

| Division | | Test | Control |
|---|---|---|---|
| Average body weight (kg/bullock) | Start of feeding (0 week) | 333.6 | 344.2 |
| | 20 weeks after | 542.6 | 548.0 |
| | 40 weeks after | 720.6 | 729.0 |
| Average increase in body weight (kg/bullock) | 0—20 weeks after | 209.0 | 203.8 |
| | 0—40 weeks after | 387.0 | 384.8 |
| Concentrate feed intake (kg/bullock) | 0—20 weeks after | 1257.5 | 1478.6 |
| | 0—40 weeks after | 2755.0 | 3106.0 |
| Roughage intake (kg/bullock) | 0—20 weeks after | 126.9 | 137.6 |
| | 0—40 weeks after | 292.6 | 297.8 |
| Feed conversion (Note 1) | 0—20 weeks after | 6.02 | 7.26 |
| | 0—40 weeks after | 7.12 | 8.07 |
| Feed efficiency (Note 2) | 0—20 weeks after | 0.166 | 0.138 |
| | 0—40 weeks after | 0.140 | 0.124 |

Feed conversion and feed efficiency were calculated by the following equations without regard for roughage intake:

Note 1. Feed conversion=Concentrate feed intake÷Average increase in body weight
Note 2. Feed efficiency=Average increase in body weight÷Concentrate feed intake

**Claims**

1. A feed additive comprising at least an ester of saccharide of fatty acid with 6—24 carbons and at least a salt of fatty acid with 6—24 carbons, or a feed comprising said feed additive, wherein the weight ratio of the saccharide fatty acid ester to the fatty acid salt is 97:3 to 3:97, the additive being used in an amount of 0.001 to 20% by weight of feed, and preferably of 0.02 to 5%.

2. A feed additive, or a feed comprising it, as claimed in claim 1, wherein the fatty acid salt is fatty acid alkali metal salt.

14

3. A feed additive, or a feed comprising it, according to claim 1 or 2, wherein the fatty acid salt is fatty acid ammonium salt.

4. A feed additive, or a feed comprising it, according to claim 1 or 2, wherein the fatty acid salt is fatty acid basic amino acid salt.

5. A feed additive, or a feed comprising it, according to claim 1 or 2, wherein the saccharide fatty acid ester is sucrose fatty acid ester.

6. A feed additive, or a feed comprising it, according to claim 1 or 2, wherein the saccharide fatty acid ester is raffinose fatty acid ester.

7. A feed additive, or a feed comprising it, according to claim 1 or 2, wherein the saccharide fatty acid ester is maltotriose fatty acid ester.

8. A feed additive, or a feed comprising it, according to claim 1, 2, 3, 5 or 7, which contains crude products comprising at least a saccharide fatty acid ester and a fatty acid salt, said crude products being prepared by subjecting saccharide and fatty acid lower-alkyl ester or fatty acid triglyceride to alcoholysis in the presence of a potassium or sodium basic salt.

9. A feed additive or a feed comprising it, according to claim 1, 2, 3, 5 or 8 which contains crude products comprising at least a sucrose fatty acid ester and a fatty acid salt, said crude products being prepared by subjecting sucrose and oil or fat to alcoholysis in the presence of a potassium or sodium basic compound as catalyst.

10. A feed additive or a feed comprising it, according to claim 9, wherein the oil or fat is beef tallow.

11. A feed additive or a feed comprising it, according to claim 8 or 9, wherein the catalyst is potassium carbonate.

## Patentansprüche

1. Ein Futtermittelzusatz, umfassend mindestens einen Ester eines Saccharids einer Fettsäure mit 6—24 Kohlenstoffen und mindestens ein Salz einer Fettsäure mit 6—24 Kohlenstoffen, oder ein Futtermittel, umfassend den Futtermittelzusatz, worin das Gewichtsverhältnis des Saccharid- Fettsäureesters zum Fettsäuresalz 97:3 bis 3:97 beträgt, wobei der Zusatz in einer Menge von 0,001 bis 20 Gew.-% des Futtermittels und vorzugsweise von 0,02 bis 5% verwendet wird.

2. Ein Futtermittelzusatz, oder ein Futtermittel, das ihn enthält, wie in Anspruch 1 beansprucht, worin das Fettsäuresalz ein Fettsäure- Alkalisalz ist.

3. Ein Futtermittelzusatz, oder ein Futtermittel, das ihn enthält, gemäß Anspruch 1 oder 2, worin das Fettsäuresalz Fettsäure- Ammoniumsalz ist.

4. Ein Futtermittelzusatz, oder ein Futtermittel, das ihn enthält, gemäß Anspruch 1 oder 2, worin das Fettsäuresalz Fettsäure- basische—Aminosäuresalz ist.

5. Ein Futtermittelzusatz, oder ein Futtermittel, das ihn enthält, gemäß Anspruch 1 oder 2, worin der Saccharid-Fettsäureester Saccharose- Fettsäureester ist.

6. Ein Futtermittelzusatz, oder ein Futtermittel, das ihn enthält, gemäß Anspruch 1 oder 2, worin der Saccharid-Fettsäureester Raffinose- Fettsäureester ist.

7. Ein Futtermittelzusatz, oder ein Futtermittel, das ihn enthält, gemäß Anspruch 1 oder 2, worin der Saccharid-Fettsäureester Maltotriose- Fettsäureester ist.

8. Ein Futtermittelzusatz, oder ein Futtermittel, das ihn enthält, gemäß Anspruch 1, 2, 3, 5 oder 7, der Rohprodukte, umfassend mindestens einen Saccharid- Fettsäureester und ein Fettsäuresalz, enthält, wobei die Rohprodukte hergestellt wurden durch Unterwerfen von Saccharid und Fettsäure- niedrig-Alkylester oder Fettsäure- triglyzerid einer Alkoholyse in Anwesenheit eines basischen Kalium- oder Natriumsalzes.

9. Ein Futtermittelzusatz, oder ein Futtermittel, das ihn enthält, gemäß Anspruch 1, 2, 3, 5 oder 8, der Rohprodukte, umfassend mindestens einen Saccharose- Fettsäureester und ein Fettsäuresalz, enthält, wobei die Rohprodukte hergestellt wurden durch Unterwerfen von Saccharose und Öl oder Fett einer Alkoholyse, in Anwesenheit einer basischen Kalium- oder Natriumverbindung als Katalysator.

10. Ein Futtermittelzusatz, oder ein Futtermittel, das ihn enthält, gemäß Anspruch 9, worin das Öl oder Fett Rindertalg ist.

11. Ein Futtermittelzusatz, oder ein Futtermittel, das ihn enthält, gemäß Anspruch 8 oder 9, worin der Katalysator Kaliumcarbonat ist.

## Revendications

1. Additif d'alimentation comprenant au moins un ester de saccharide d'acide gras à 6—24 carbones et au moins un sel d'acide gras à 6—24 carbones, ou un produit d'alimentation comprenant ledit additif, dans lequel le rapport pondéral de l'ester de saccharide d'acide gras au sel d'acide gras est de 97:3 à 3:97, l'additif étant utilisé dans une quantité de 0,001 à 20% en poids de l'aliment, et de préférence de 0,02 à 5%.

2. Additif d'alimentation, ou produit d'alimentation le comprenant, suivant la revendication 1, dans lequel le sel d'acide gras est un sel de métal alcalin d'acide gras.

3. Additif d'alimentation, ou produit d'alimentation le comprenant, suivant la revendication 1 ou 2, dans lequel le sel d'acide gras est un sel d'ammonium d'acide gras.

4. Additif d'alimentation, ou produit d'alimentation le comprenant, suivant la revendication 1 ou 2, dans lequel le sel d'acide gras est un sel d'aminoacide basique d'acide gras.

5. Additif d'alimentation, ou produit d'alimentation le comprenant, suivant la revendication 1 ou 2, dans lequel l'ester de saccharide d'acide gras est un ester de sucrose d'acide gras.

6. Additif d'alimentation, ou produit d'alimentation le comprenant, suivant la revendication 1 ou 2, dans lequel l'ester de saccharide d'acide gras est un ester de raffinose d'acide gras.

7. Additif d'alimentation, ou produit d'alimentation le comprenant, suivant la revendication 1 ou 2, dans lequel l'ester de saccharide d'acide gras est un ester de maltotriose d'acide gras.

8. Additif d'alimentation, ou produit d'alimentation le comprenant, suivant la revendication 1, 2, 3, 5 ou 7, qui contient des produits bruts comprenant au moins un ester de saccharide d'acide gras et un sel d'acide gras, les dits produits bruts étant préparés par soumission d'un saccharide et d'un ester d'alkyle inférieur d'acide gras ou un triglycéride d'acide gras à une alcoolyse en présence d'un sel basique de sodium ou de potassium.

9. Additif d'alimentation, ou produit d'alimentation le comprenant, suivant la revendication 1, 2, 3, 5 ou 8, qui contient des produits bruts comprenant au moins un ester de sucrose d'acide gras et un sel d'acide gras, les dits produits bruts étant préparés par soumission de sucrose et d'huile ou graisse à une alcoolyse en présence d'un composé basique de sodium ou de potassium comme catalyseur.

10. Additif d'alimentation, ou produit d'alimentation le comprenant, suivant la revendication 9, dans lequel l'huile ou graisse est du suif de boeuf.

11. Additif d'alimentation, ou produit d'alimentation le comprenant, suivant la revendication 8 ou 9, dans lequel le catalyseur est le carbonate de potassium.